(19) Europäisches Patentamt / European Patent Office / Office européen des brevets

(11) **EP 4 401 851 B1**

(12) **EUROPEAN PATENT SPECIFICATION**

| | |
|---|---|
| (45) Date of publication and mention of the grant of the patent:<br>**29.10.2025 Bulletin 2025/44** | (51) International Patent Classification (IPC):<br>**B01D 5/00** *(2006.01)*  **F02B 29/04** *(2006.01)*<br>**F02M 26/22** *(2016.01)*  **F02M 35/08** *(2006.01)* |
| (21) Application number: **22802895.7** | (52) Cooperative Patent Classification (CPC):<br>**B01D 5/0027; F02M 35/088** |
| (22) Date of filing: **09.09.2022** | (86) International application number:<br>**PCT/EP2022/025421** |
| | (87) International publication number:<br>**WO 2023/041193 (23.03.2023 Gazette 2023/12)** |

(54) **CONDENSATE SEPARATOR, CHARGE GAS TUBE ASSEMBLY AND GAS ENGINE**

KONDENSATABSCHEIDER, LADUNGSGASROHRANORDNUNG UND GASMOTOR

SÉPARATEUR DE CONDENSAT, ENSEMBLE TUBE À GAZ DE CHARGE ET MOTEUR À GAZ

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR** | (72) Inventor: **BERGER, Olaf**<br>**68167 Mannheim (DE)** |
| (30) Priority: **14.09.2021 GB 202113068** | (74) Representative: **Novagraaf Group**<br>**Chemin de l'Echo 3**<br>**1213 Onex / Geneva (CH)** |
| (43) Date of publication of application:<br>**24.07.2024 Bulletin 2024/30** | (56) References cited:<br>**EP-A1- 2 366 883**    **CN-U- 209 286 866**<br>**DE-A1- 102005 050 133**    **US-A- 4 503 813**<br>**US-A1- 2003 226 445**    **US-A1- 2004 079 079**<br>**US-A1- 2014 346 031**    **US-A1- 2019 024 550** |
| (73) Proprietor: **Caterpillar Energy Solutions GmbH**<br>**68167 Mannheim (DE)** | |

## Description

Technical Field

The present invention pertains to a condensate separator for a charge gas tube assembly of a stationary gas engine, comprising a cylindrical part having an inner surface, an outer surface and a condensate outlet duct configured to allow condensate to drain from the inner surface into the condensate outlet duct. The present invention also pertains to a charge gas tube assembly for a gas engine comprising a charge gas manifold, at least one charge gas tube element and at least one such condensate separator mounted between the charge gas manifold and the charge gas tube element and/or between the charge gas tube element in a further charge gas tube element. The invention also pertains to a gas engine comprising such charge gas tube assembly.

Technological Background

Stationary gas engines are used in many different configurations to generate electrical energy and heat from a gas feedstock. Such gas engines are usually internal combustion engines, ICEs, comprising reciprocating piston cylinders. Due to their modular and compact design, installations of gas engines may consist of just one single unit or of a large array of gas engines. Reciprocating ICE gas engines further allow a wide range of operation, including variations in power output and different combustion feed gases, and require comparably little infrastructure to set up and maintain engine operation.

Gas engines have the compelling advantage that their combustion products, for example carbon dioxide $CO_2$ and water $H_2O$, usually have a lesser global warming potential than its feedstock gases, for example methane $CH_4$ (natural gas). Specifically, gas engines allow utilizing hydro-carbonaceous gas resources which would otherwise be released into the atmosphere such as biogases, waste gases but also some methane reservoirs existing in nature such as mining gases.

Passing over cold heat exchanger surfaces, the charge air may possibly be cooled to a temperature lower than its dew point temperature. Likewise, when a turbocharger compressor is used to compress (and thereby heat) charge air, the compressed air must be cooled down isobarically before it is led to the combustion stage. Such (almost) isobaric charge air cooling can also result in charge air temperatures below the corresponding dew point temperature. At temperatures below dew point temperature, water vapor condensation sets in and condensate accumulates.

With rising initial ambient air humidity, dew point temperature rises and along with it rises the likelihood of cooling charge air below its dew point. As a result, the risk of water vapor condensation inside of the charge air duct increases progressively with rising ambient air humidity.

Further, compressing charge gas in a compressor also increases the dew point temperature and therefore the likelihood of reaching sub-dew temperatures during isobaric cooling. Gas engine installations in places of high humidity and/or with high charge gas compression ratios therefore often show substantial water vapor condensation within the charge air duct and/or within the air mixture lines.

Air or mixture flow leads to the entry of condensate into the combustion chamber (cylinder). Liquid condensate entering the cylinders of the gas engine may result in wear on components and operating faults.

To address the removal of retained condensate from a charge air intake duct, one approach known from the state of the art, as for example disclosed in JP6019481B2, is to design the cylinder head geometry such that a recess for storing condensate is formed.

According to another approach known from the state of the art, as for example disclosed in JP6252076B2, water vapor condensate can be separated using a hole or opening in the charge air duct. However, such openings have the downside that condensate is only partially collected and separated.

Further, passing charge air over empty air pockets leads to loss of charge pressure and loss of energy.

According to another approach known from the state of the art, water vapor condensation can be removed by using higher receiver temperatures, air temperatures or mixture temperatures in the cylinders and lower motor outputs. However, this inherently requires accepting gas engine operation at reduced power and at reduced thermal efficiency.

From US 2004/079079 A1, a toroidal condensate separator comprising a charge air duct and a radially inward oriented annular lip is known. US 2014/346031 A1 discloses a ring-shaped element within a pipe to draw liquid off from the space formed between ring and pipe, wherein the wall of the ring extends radially inward. CN 209 286 866 U discloses a condenser including a lower convex portion that communicates with a liquid discharge pipe. US 4 503 813 A discloses a condenser attached to the end of a tail pipe, wherein condensate is trapped in a well 87 by the edge of the frustoconical tube 88 and is removed via a conduit. DE 10 2005 050 133 A1 discloses a condensate separator to mitigate corrosion problems in turbo chargers.

The condensate separator, the charge gas tube assembly and the gas engine of the present disclosure solve one or more problems set forth above.

Summary of the Invention

Starting from the prior art, it is an objective of the present disclosure to provide a simple, cost-effective condensate separator for collecting a film of liquid condensate flowing along the wall and drain the collected condensate at one specific location on the condensate separator.

This objective is solved by means of a condensate separator for a charge gas tube assembly of a stationary gas engine with the features of claim 1, a charge gas tube assembly for a gas engine with the features of claim 9 and a gas engine with the features of claim 11. Preferred embodiments are set forth in the present specification, the Figures as well as the dependent claims.

Accordingly, a condensate separator for a charge gas tube assembly of a stationary gas engine is provided, comprising a cylindrical part having an inner surface, an outer surface, and a condensate outlet duct configured to allow condensate to drain from the inner surface into the condensate outlet duct. The cylindrical part comprises a collection lip configured to collect condensate flowing along the inner surface of the cylindrical part. According to the invention, the collection lip is an annular collection lip comprising a radially inward extending protruding portion protruding from the inner surface of the cylindrical part and a cantilevered portion having a free end and a fixed end, wherein the cantilevered portion is tapered such that a distance between the inner surface of the cylindrical part and the cantilevered portion is smaller at the free end than at the fixed end of the cantilevered portion.

Furthermore, a charge gas tube assembly for a gas engine is provided, comprising a charge gas manifold, at least one charge gas tube element and at least one condensate separator mounted between the charge gas manifold and the charge gas tube element and/or between the charge gas tube element and a further charge gas tube element.

In addition, a gas engine is provided comprising a charge gas tube assembly.

Brief Description of the Drawings

The present disclosure will be more readily appreciated by reference to the following detailed description when being considered in connection with the accompanying drawings in which:

Fig. 1 schematically shows a condensate separator for a charge gas tube assembly according to embodiment in a cross-sectional view;
Fig. 2 schematically shows a condensate separator for a charge gas tube assembly according to another embodiment in a cross-sectional view;
Fig. 3 schematically shows a charge gas tube assembly for a gas engine according to embodiment in a cross-sectional view;
Fig. 4 schematically shows a charge gas tube assembly for a gas engine according to another embodiment in a cross-sectional view; and
Fig. 5 schematically shows a charge gas tube assembly for a gas engine comprising intercooler, a charge gas manifold and two tube elements.

Detailed Description of Preferred Embodiments

In the following, the invention will be explained in more detail with reference to the accompanying Figures. In the Figures, like elements are denoted by identical reference numerals and repeated description thereof may be omitted in order to avoid redundancies.

In the following specification, the terms "air", "charge air", "water" and "$H_2O$" are used exemplary in the context of the disclosed embodiments of the condensate separator, the charge gas tube assembly and the gas engine without being delimited to the media air and water. The skilled artisan will appreciate that the disclosure is generally directed to devices suitable for handling two-phase feed flows of a gas engine, in particular liquid phase separation in liquid-gas two-phase flows. Therefore, the teaching of the disclosure may be applicable to any feed gas composition of a gas engine having a water phase and gaseous phase from gas-air-water vapor mixture.

The present disclosure is generally directed towards condensate separators for charge gas tube assemblies of stationary gas engines. Condensate separators according to the present disclosure provide condensate separation by means of a simple, cost-effective condensate separator having low flow resistance. The underlying principle of the present disclosure is to collect water vapor condensate at minimum structural changes and with minimal impact on operation safety and with minimal added flow resistance in the charge air duct.

To achieve this goal, it was found that providing a condensate drain in combination with a condensate collection lip solves several problems known from the state of the art.

Collecting condensate may be achieved in a first step by the collection lip extending over all areas which are likely to be exposed to condensate film overflow. Draining the condensate may be achieved subsequently by providing a minimal drainage opening at a location at which collected condensate usually accumulates.

Another underlying principle of the present disclosure is to include the entire condensate separator in a component of a gas engine that is easy to replace and retrofittable to existing charge gas tube assemblies and gas engines.

Thereto, the present invention and its underlying principles are disclosed exemplary for a condensate separator for a charge gas tube assembly of a stationary gas engine.

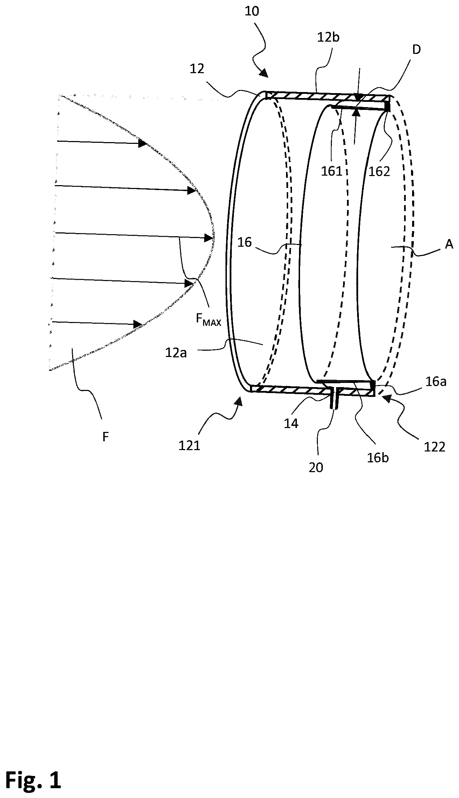

In all Figures 1-5, a cartesian coordinate system is provided for reference purposes. The cartesian coordinates are depicted such that the Figures may be put in relation with each other by said reference coordinate system.

In Figures 1-4, the shown condensate separator 10 as well as the charge gas tube assembly 200 are illustrated in a cross-sectional view along a longitudinal plane extending along the x-z-plane of the coordinate system. The dashed lines in said Figures are provided to assist visual comprehension of the perspective intended by the illustration.

Figure 1 schematically shows a condensate separator 10 for a charge gas tube assembly according to an embodiment in a cross-sectional view. Not part of the condensate separator 10 is the charge air flow F which is illustrated by a simplified parabolic flow profile. As shown in the exemplary flow profile to the left of condensate separator 10 in Figure 1, the charge air flow F can have a maximum $F_{MAX}$ in its center which may be in line with the longitudinal center axis L of the condensate separator 10.

The condensate separator 10 comprises a cylindrical part 12 having an inner surface 12a and an outer surface 12b. The radial dimension of the cylindrical part 12 may be described by the inner cylinder radius $R_{12}$ extending from the longitudinal center axis L to the inner surface 12b. Correspondingly, a flow cross-section A of the charge air flow F at the radius $R_{12}$ may be expressed as $A_{12} = \pi R_{12}^2$. The axial dimension between a first end 121 and a second end 122 of the cylindrical part 12 may be described by the distance between the first and second ends 121, 122 along the longitudinal axis L.

The condensate separator 10 further comprises a condensate outlet duct 14 which is configured to allow condensate (not shown in Figure 1) to drain from the inner surface 12a into the condensate outlet duct 14. The cylindrical part 12 comprises a collection lip 16 which is configured to collect condensate flowing along the inner surface 12a of the cylindrical part 12.

When parts of the charge air flow F reach temperatures lower than their dew point for the particular barometric pressure, water vapor condensate is formed. This usually appears at cold surfaces such as charge air ducts or intercooler surfaces, for example intercooler fins. Driven by flow forces inflicted to the condensate by the charge air flow F at the liquid/charge air interface, the condensate is dragged across the inner surface 12a towards the combustion chamber. To avoid condensate entering the engine cylinders, the collection lip 16 is configured to collect condensate flowing along the inner surface 12a of the cylindrical part 12. After condensate collection, condensate is drained from the inner surface 12 into the condensate outlet duct 14 by gravitational forces, static and dynamic pressures of the condensate and/or capillary forces.

The collection lip 16 may be configured such that it inflicts only a minimum of flow resistance, or pressure drop, on the charge flow F through the cylindrical part 12. This can be achieved by maximizing the flow cross section $A_{16}$ along the collection lip 16. The collection lip 16 may be configured such that the charge air flow F through the cylindrical part 12 is substantially passing over the collection lip 16. What is meant by that is that the collection lip 16 may be provided such that a charge air flow F in a volume between the collection lip 16 and the inner surface 12a of the condensate separator 10 is negligible.

The outlet duct 14 and/or collection lip 16 may further be configured such that if condensate flowing along the inner surface 12a is collected by the collection lip 16, the accumulation begins at or inside the condensate outlet duct 14.

The collection lip 16 of the condensate separator 10 is an annular collection lip. Thereby, condensate passing the inner surface 12a at any trajectory along the inner surface 12a may be collected and led into the condensate outlet duct 14.

The collection lip 16 of the condensate separator 10 comprises a protruding portion 16a protruding from the inner surface 12a of the cylindrical part 12 and a cantilevered portion 16 having a free end 161 and a fixed end 162. Protruding from the inner surface 12a is to be understood as protruding radially inwards towards the longitudinal axis L of the condensate separator 10. Inherently, the flow cross-section A of the condensate separator 10 is thereby reduced from the inner surface radius $R_{12}$ to a collection lip radius $R_{16}$, which results in a reduced collection lip flow cross-section $A_{16}$. The cantilevered portion 16b may be cantilevered by its fixed end 162 on the radially inwardly facing end of the protruding portion 16a. The cantilevered portion 16b may be cantilevered such that it extends substantially parallel to the longitudinal axis L and extends in a direction facing the direction of the charge air flow F. Thereby, a cavity may be provided in which water vapor condensate may be collected or, if no vapor condensate is present, low charge air velocities are present.

According to the invention, the cantilevered portion 16b is tapered such that a distance D between the inner surface 12a of the cylindrical part 12 and the cantilevered portion 16b is smaller at the free end 161 of the cantilevered portion 16b than at the fixed end 162 of the cantilevered portion 16b. The distance D may be expressed by the difference of inner surface radius $R_{12}$ minus the collection lip radius $R_{16}$ minus the thickness of the cantilevered portion 16b. In other words, the cantilevered portion 16b may be tapered such that its radial thickness decreases along the longitudinal axis L towards the protruding portion 16a. Thereby, a labyrinth-like chamber may be formed in which condensate may be accumulated. In other words, the collection lip 16 may provide a widening cavity. Thereby, the collection lip can receive the condensate film, distributed along the inner surface 12a, more conveniently.

Alternatively, according to an embodiment not shown in Figure 1, the collection lip may also be configured such that it provides a narrowing cavity or a cavity having a substantially constant diameter.

According to an example, not covered by the invention, the cantilevered portion 16b of the condensate separator 12 may be configured such that a flow cross-section $A_{16}$ of the cylindrical part 12 remains constant along the collection lip 16. Thereby, the pressure drop inflicted to the charge air flow F passing through the cylindrical part 12 may be minimized. The collection lip 16 may thus be designed in the shape of an approximated forward-facing step.

By providing the condensate separator 10 as a component of the cylindrical part 12, it may be used as connection part between two charge gas tube assembly components. The condensate outlet duct 14 may be positioned at an end 121, 122 of the cylindrical part 12. As an example, the condensate outlet duct 14 may be positioned at a distance of 1 inch or less from an end 121, 122 of the cylindrical part 12. In principle, the further the condensate duct 14 is positioned to an and 121, 122 of the cylindrical part 12, the better. This way, condensate drainage may be provided in a mounted state of the condensate separator, in particular a mounted state in which a flange is connected to both first and second ends 121, 122 of the cylindrical part 12.

Further, the cylindrical part 12 and/or the condensate outlet duct 14 may comprise aluminum, composite materials, plastics, and/or coated materials. Providing aluminum has the advantage of a lightweight material which is easy to manufacture and cheap in production costs. Further, aluminum is chemically stable against corrosion by water vapor condensate.

The cylindrical part 12, the outlet duct 14 and the collection lip 16 comprising the protruding portion 16a and the cantilevered portion 16b having a free end 161 and a fixed end 162 may be provided as one component of the condensate separator 10. The condensate separator 10 may further be configured such that it comprises means for enhancing condensate flow along the inner surface 12a of the cylindrical part 12. For example, means for enhancing condensate flow may be provided in the shape of an annular groove, which is not shown in Figure 1. By providing means for enhancing condensate flow along the inner surface 12a, condensate may be collected conveniently by the collection lip 16. Further, the separator 10 may be configured such that it comprises means for enhancing draining of condensate flow from the inner surface 12a of the cylindrical part 12 into the outlet duct 14. Thereby, condensate flowing along the inner surface 12a of the cylindrical part 12 may be drained conveniently by the collection lip 16.

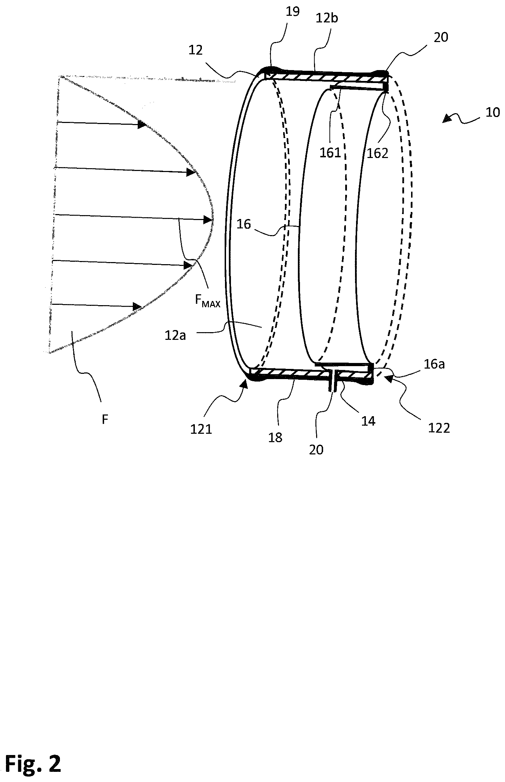

Figure 2 schematically shows a condensate separator 10 for a charge gas tube assembly according to a further embodiment in a cross-sectional view. The embodiment shown in Figure 2 may incorporate the features of the embodiment shown in Figure 1. According to this embodiment, the condensate outlet duct 14 may comprise a tube 22 protruding from the outer surface 12b of the cylindrical part 12. By comprising a tube 22 protruding from the outer surface 12 be of the cylindrical part 12, condensate may be led from the inner surface 12a into the condensate outlet duct 14 to the outside via the tube 22.

According to the embodiment shown in Figure 2, the outer surface 12b of the cylindrical part 12 may comprise an elastic coating 18. The condensate outlet duct 14 may extend through the elastic coating 18. In addition, the elastic coating 18 may comprise an annular protrusion at at least one end 121, 122 of the cylindrical part 12 extending in an axial and/or radial direction. Specifically, the elastic coating 18 shown in Figure 2 may comprise a first annular protrusion 19 on the first end 121 of the cylindrical part 12 and a second annular protrusion 20 on the second end 122 of the cylindrical part 12. The first annular protrusion 19 and the second annular protrusion 20 may each protrude in a radial direction.

Providing the elastic coating 18 has the advantage that the condensate separator 10 may be used as a gas-tight connector between two charge air components of a gas engine. More specifically, the condensate separator 10 may be flanged between two charge air components of a gas engine in a gas-tight manner. Gas-tight sealing is important to avoid leakage charge air flows leaving the charge gas tube assembly. The elastic coating 18 can be beneficial for sealing the condensate separator 10 in a gas leak-tight manner when flanged between two charge air components of a gas engine. **In** particular, the first annular protrusion 19 on the first end 121 of the cylindrical part 12 and the second annular protrusion 20 on the second end 122 of the cylindrical part 12 may be beneficial for sealing the condensate separator 10 when flanged between two charge gas duct components of a gas engine.

The elastic coating 18 may comprise an elastomer. Thereby, the elastic coating may be realized in a cost-efficient, reliable and effective way. The elastic coating 18 may be vulcanized onto the outer surface 12b of the cylindrical part 12. Thereby, a reliable, component connection may be achieved.

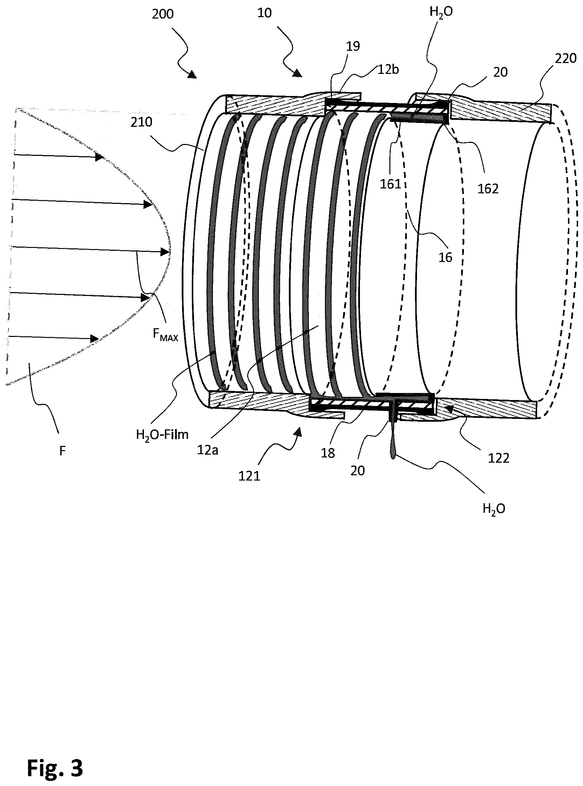

Figure 3 schematically shows a charge gas tube assembly 200 for a gas engine according to embodiment in a cross-sectional view according to a first embodiment. The charge gas tube assembly 200, also called receiver tube, for a gas engine comprises a charge gas manifold 210, at least one charge gas tube element 220 and at least one condensate separator 10. The condensate separator 10 is mounted between the charge gas manifold 210 and the charge gas tube element 220. According to the embodiment shown in Figure 3, the condensate separator 10 may be flanged between the charge gas manifold 210 and the charge gas tube element 220 in a gas leak-tight manner. As an example, the condensate separator 10 which flange between the charge gas manifold 210 and the charge gas tube element 220 may be the condensate separator 10 according to the embodiment shown in Figure 2. To this end, the elastic coating 18 of the cylindrical part 12 may ensure the gas leak-tight connection by providing the first annular protrusion 19 at a first end 121 of the cylindrical part 12 and a second annular protrusion 20 at a second end 122 of the cylindrical part 12, wherein the first and second annular protrusions 19, 20 are partially squeezed to provide the gas leak-tight connection.

Being flanged in between the charge gas manifold 210 and the charge gas tube 220, the tube 22 protruding from the outer surface 12 be of the cylindrical part 12 provides an outlet for collected condensate. Leaving the inner surface 12a of the cylinder part 12 via the condensate outlet duct 14, condensate may thereby escape the condensate separator 10. According to the illustration provided in Figure 3, accumulated condensate flowing along the inner surface 12a of the cylindrical part 12 as well as on an inner surface of the charge gas manifold 210 is represented schematically as $H_2O$.

According to the embodiment shown in Figure 3, the condensate separator 10 may be configured such that the condensate outlet duct 14 is provided on a lowermost point of the charge gas tube assembly 200. Thereby, collected and accumulated condensate may be drained efficiently. Additionally or alternatively, the condensate separator 10 may be configured such that the condensate outlet duct 14 is provided at an elevated position on the condensate separator 10 to allow condensate to drain from the inner surface 12a into the condensate outlet duct 14. This may for example be beneficial if, for a particular charge gas tube assembly configuration, centrifugal forces generated by the charge gas manifold 210 typically cause condensate separation a different position inside the condensate separator 10.

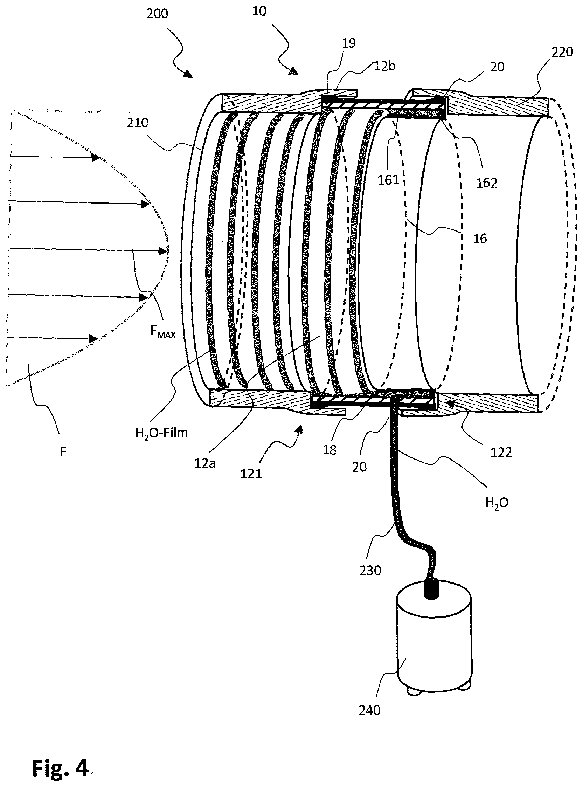

Figure 4 schematically shows a charge gas tube assembly 200 for a gas engine according to another embodiment in a cross-sectional view. The embodiment shown in Figure 4 may be based on the embodiment shown in Figure 3 with the additional development in that the charge gas tube assembly 200 may comprise a condensate line 230 and a condensate tank 240. The condensate line 230 and the condensate tank 240 may be fluidly connected with the condensate outlet duct 14. The condensate line 230 and the condensate tank 240 may be connected with the tube 22 in a gas leak-tight manner. By that, gas leakage from the inside of the charge gas tube assembly 200 may be prevented. This can be important in a case when the charge gas tube assembly 200 comprises compressed charge air. In this case, a condensate outlet duct 14 being connected to ambient air would lead to pressure release from the inside of the charge gas tube assembly to the outside.

The gas tube assembly 200 may be configured such that the charge gas manifold 210 and the condensate separator 10 may form a backward-facing step 215 for a charge air flow F approaching the collection lip 16. Thereby, condensate accumulation may be improved by forming a condensate reservoir and by increased turbulence in the charge air flow F.

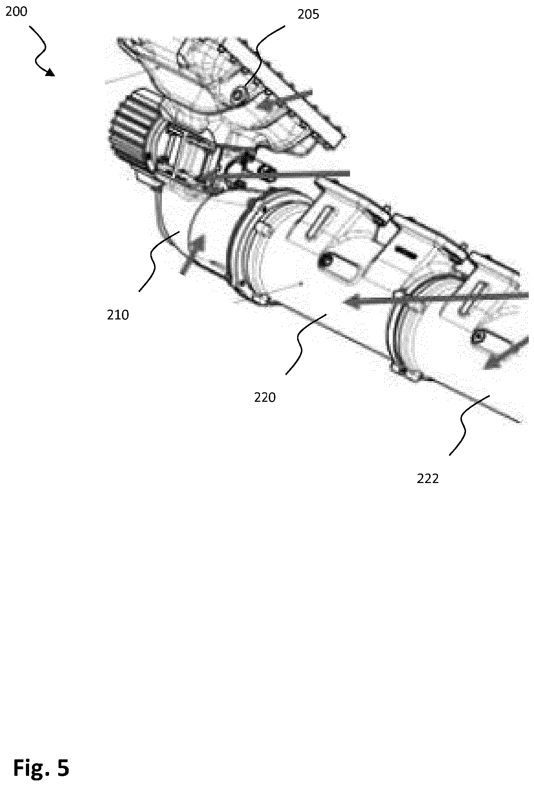

Figure 5 schematically shows a charge gas tube assembly 200 for a gas engine (not shown in Figure 5) which may comprise an intercooler 205. The intercooler 205 may be connected to a charge gas manifold 210 and a charge gas tube element 220. Further, the gas engine may comprise a further charge gas tube element 222, which is connected to the first charge gas tube element 220 along the longitudinal axis L. The charge gas manifold 210 may have a bent shape, whereas the first charge gas tube element 220 and the second charge gas tube element 222 may have a straight cylindrical shape. As can be seen from the illustration of Figure 5, each charge gas tube element 220 and 222 may comprise openings to their sides via which the charge gas tube elements 220 and 222 may be connected to cylinders of the gas engine (not shown in Figure 5). The charge gas manifold 210, the charge gas tube element 220 and the further charge gas tube element 222 may each be flanged together with their adjacent component. Inherently, each flanged joint may require a connection component. According to the present disclosure, this connection component may be replaced by a condensate separator 10 which is indicated in Figure 5 by the partially dashed reference line of reference number 10.

Since water vapor condensation occurs first on cold spots, condensation formation is most likely in the intercooler 205. Driven by shear stresses inflicted to the condensate at the liquid/charge air interface, the condensate may be dragged by the charge air flow F from the intercooler surfaces downstream into the charge gas manifold 210 and further downstream into the charge gas tube elements 220 and 222, which are directly connected to the piston cylinders of the gas engine. By providing a condensate separator 10 according to the present disclosure in between the flange connection of the air manifold 210 and the first tube element 220, condensate can be separated. Flowing along the inner surfaces of the charge gas tube assembly 200, in particular flowing along the inner surface 12a of the cylindrical part 12 (not shown in Figure 5), condensate may be collected by the collection lip 16 (not shown in Figure 5) and drained from the inner surface 12a into the condensate outlet duct 14 by means of a collection lip 16 (not shown in Figure 5). From the condensate outlet duct 14, the collected and accumulated condensate may be drained to the outside applying appropriate measures as shown in the embodiments of the disclosure presented herein.

It will be obvious for a person skilled in the art that these embodiments and items only depict examples of a plurality of possibilities. Hence, the embodiments shown here should not be understood to form a limitation of these features and configurations.

This is in particular the case with respect to the following optional features which may be combined with some or all embodiments, items and all features mentioned before in any technically feasible combination. As an example, a condensate separator may have more than one condensate outlet duct which is configured to allow condensate to drain from the inner surface into one or more of the condensate outlet ducts. Further, a condensate separator for a charge gas tube assembly may comprise more than one cylindrical parts having inner surfaces and may comprise part of different geometries. Relevant for the teaching of the present disclosure is the provision of an inner surface and a collection lip configured to collect condensate flowing along the inner surface and the provision of a condensate outlet duct configured to allow condensate to drain from the inner surface into the condensate outlet duct. Naturally, a condensate separator according to the present disclosure may comprise several collection lips configured to collect condensate flowing along the inner surface.

To this end, a charge gas tube assembly for a gas engine may comprise more than one charge gas manifold and more than one and a further charge gas tube elements. The charge gas tube assembly may further comprise other components of the charge air system of a gas engine, in particular an intercooler, air filters and gas mixing devices.

A condensate separator for a charge gas tube assembly of a stationary gas engine is provided, comprising a cylindrical part having an inner surface and an outer surface and a condensate outlet duct configured to allow condensate to drain from the inner surface into the condensate outlet duct. The cylindrical part comprises a collection lip, configured to collect condensate flowing along the inner surface of the cylindrical part. By providing a collection lip configured to collect condensate flowing along the inner surface of the cylindrical part as a part of the cylindrical part, an easy to replace and easy to retrofit condensate separator for a charge gas tube assembly of a stationary gas engine may be provided. In fact, no further changes to the charge gas tube assembly of a stationary gas engine itself are required other than replacing a flange connector with a condensate separator according to the present disclosure.

Thereby, a film of liquid condensate flowing along the wall can be collected and the collected condensate can be drained at one specific location of the condensate separator.

The collection lip is an annular collection lip. Thereby, condensate passing the inner surface at any trajectory along the inner surface may be collected and led into the condensate outlet duct. By providing an annular collection lip, the charge air flow flowing through the condensate separator faces asymmetrical change in flow cross-section, which leads to lesser turbulence buildup.

The collection lip comprises a protruding portion protruding from the inner surface of the cylindrical part and a cantilevered portion having a free end and a fixed end. Inherently, the inner diameter of the condensate separator is thereby reduced from the inner surface radius to the collection lip radius which results in a reduced flow cross-section along the length of the cantilevered part of the collection lip. However, by providing a protruding portion protruding from the inner surface of the cylindrical and a cantilevered portion having a free end and a fixed end, a cavity may be provided inside the condensate separator. In this cavity, water vapor condensate may be collected or, if no vapor condensate is present, low charge air velocities are present. Thereby, condensate can be collected between the inner surface of the condensate separator and the protruding and cantilever portions of the collection lip when the condensate separator is configured such that the free end of the cantilevered portion is facing towards the charge air flow.

The cantilevered portion is tapered such that a distance between the inner surface of the cylindrical part and the cantilevered portion may be smaller at the free end than at the fixed end of the cantilevered portion. In other words, the cantilevered portion may be tapered such that its radial thickness decreases along a longitudinal axis towards the protruding portion. Thereby, condensate flowing along the inner surface of the cylindrical part a be collected more efficiently. In addition thereto, when no condensate is present in the collection lip, charge air flow velocities inside the collection lip may be reduced further which may lead to less turbulences, less noise and a lower pressure drop.

According to an example, not part of the claimed invention, the cantilevered portion may be tapered such that a distance between the inner surface of the cylindrical part and the cantilevered portion may be greater at the free end than at the fixed end of the cantilevered portion. In other words, the cantilevered portion may be tapered such that its radial thickness increases along a longitudinal axis towards the protruding portion. Thereby, condensate flowing along the inner surface of the cylindrical part a be collected more efficiently. In addition thereto, when no condensate is present in the collection lip, charge air flow velocities inside the collection lip may be reduced further which may lead to less turbulences, less noise and a lower pressure drop.

According to an example, not covered by the invention, the cantilevered portion may be configured such that a flow cross-section of the cylindrical part remains constant along the collection lip. Thereby, the pressure drop inflicted to the charge air flow passing through the cylindrical part may be minimized. In other words, the collection lip may thus be provided in the shape of an approximated forward-facing step.

In a preferred embodiment, the condensate outlet duct may comprise a tube protruding from the outer surface of the cylindrical part. Thereby, the condensate outlet duct may be connected fluidly with external components useful for draining collected and accumulated condensate.

According to a further development, the condensate outlet duct may be positioned at an end of the cylindrical part. For example, the condensate outlet duct may be positioned at a distance of less than 1 inch from an end of the cylindrical part. By that, access to the condensate outlet duct and optionally to the tube may be provided even in a state of condensate separator in which it is mounted in a charge gas tube assembly. Thereby, flange connectors commonly used in charge gas tube assemblies may conveniently be replaced by a condensate separator according to the present disclosure without necessitating further changes to the charge gas tube assembly and/or the gas engine.

In a further development, the cylindrical part and/or the condensate outlet duct may comprise aluminum, composite materials, plastics, and/or coated materials. Thereby, the condensate separator may be provided as a lightweight material component which is easy to manufacture and cheap in production costs. Further, aluminum is chemically stable against corrosion by water vapor condensate in contact with the condensate separator.

According to a further embodiment, the outer surface of the cylindrical part may comprise an elastic coating, wherein the condensate outlet duct may extend through the elastic coating. Providing the elastic coating may have the advantage that the condensate separator may be used as a gas tight connector between two charge air components of a gas engine. More specifically, the condensate separator may be flanged between two charge air components of a gas engine in a gas tight manner. As mentioned above in the context of Figure 2, gas tight sealing may be important to avoid leakage charge air flows in the charge gas tube assembly.

In a further development, the elastic coating may comprise an elastomer. Thereby, the elastic coating may be realized in a cost-efficient, reliable and efficient way.

According to a further development, the elastic coating may be vulcanized onto the outer surface of the cylindrical part. Thereby, a reliable component connection may be achieved.

A charge gas tube assembly for a gas engine is provided, comprising a charge gas manifold, at least one charge gas tube element and at least one condensate separator according to the present disclosure. The at least one condensate separator may be mounted between the charge gas manifold and the charge gas tube element. Alternatively, the condensate separator may be mounted between the charge gas tube element in a further charge gas tube element. In a case when several, in particular to condensate separators are present in the charge gas tube assembly, a first condensate separator may be mounted between the charge gas manifold and the charge gas tube element and the second condensate separator may be mounted between the charge gas tube element and the further charge gas tube element.

Since water vapor condensation occurs first on cold spots, condensation formation is most likely in the intercooler, which is upstream of the charge gas manifold. Driven by shear stresses inflicted to the condensate at the liquid/charge air interface, the condensate may be dragged by the charge air flow from the intercooler surfaces downstream into the charge gas manifold and further downstream into the charge gas tube elements. Providing a condensate separator according to the present disclosure between the charge gas manifold and the charge gas tube element, condensate flowing along the inner surfaces of the charge gas tube assembly can efficiently be collected and drained by the condensate separator when the condensate flows along the inner surface of the cylindrical part.

According to a further embodiment of the charge gas tube assembly, the charge gas tube assembly may further comprise a condensate line and a condensate tank. The condensate line and a condensate tank may be fluidly connected with the condensate outlet duct. In general, charge air gas leakage is detrimental to power output and engine efficiency. Providing a gas leak-tight charge gas tube assembly may be essential for gas engines comprising a compressor. Comprising a condensate line and a condensate tank fluidly connected with the condensate outlet duct allows draining collected and accumulated condensate in a gas leak-tight manner.

A gas engine is provided comprising a charge gas tube assembly according to the present disclosure. The gas engine may be a reciprocating internal combustion engine ICE comprising piston cylinders. The gas engine may be a stationary gas engine.

The present disclosure proposes a condensate separator, a charge gas tube assembly and a gas engine. The charge gas tube assembly comprises a condensate separator according to the present disclosure. Condensate separators according to the present disclosure allow water vapor collection and removal from the inside of charge air feed systems without obstructing the charge air flow substantially and without reducing operation safety. The condensate separator according to the present disclosure offers an increased power output of gas engines operating in an environment of high air humidity and operation at a higher thermal efficiency ratio. The condensate separator according to the present disclosure also offers an increased engine life, reduced emissions, reduced maintenance and reduced operation complexity. Further, the teaching of the present disclosure provides a condensate separator which can easily be retrofitted to existing charge gas tube assemblies and/or gas engines at only minimal intendants efforts.

Industrial Applicability

With reference to the Figures, a condensate separator for a charge gas tube assembly of a stationary gas engine and a charge gas tube assembly for a gas engine are applicable in any suitable gas engine, for example a stationary gas engine.

In practice, a condensate separator for a charge gas tube assembly of a gas engine and a charge gas tube assembly of a gas engine and/or any combination of these various assemblies and components may be manufactured, bought, or sold to retrofit a charge gas tube assembly, a gas engine, or a gas engine already deployed in the field in an aftermarket context, or alternatively may be manufactured, bought, sold or otherwise obtained in an OEM (original equipment manufacturer) context.

As alluded to previously herein, the aforementioned embodiments may increase the improve the reliability and performance as will be elaborated further herein momentarily.

Referring to Figures 1 and 2, there is an embodiment shown disclosing a condensation separator for a charge gas tube assembly of a gas engine comprising a cylindrical part having an inner surface and an outer surface and a condensate outlet duct configured to allow condensate to drain from the inner surface into the condensate outlet duct. The cylindrical part comprises a collection lip, configured to collect condensate flowing along the inner surface of the cylindrical part. One skilled in the art will expect that various embodiments of the present disclosure will have an improved simplicity, more cost-effective condensate separator having a low flow resistance for a charge gas tube assembly of a stationary gas engine.

The same advantages apply to the Figures 3-5, in particular to the charge gas tube assembly comprising charge gas assembly components together with the condensation separator.

The present description is for illustrative purposes only Other aspects, features and advantages will be apparent upon an examination of the attached drawings and appended claims. As used herein, the articles "a" and "an" are intended to include one or more items, and may be used interchangeably with "one or more." Where only one item is intended, the term "one" or similar language is used. Also, as used herein, the terms "has," "have," "having," "include", "includes", "including", or the like are intended to be open-ended terms. Further, the phrase "based on" is intended to mean "based, at least in part, on" unless explicitly stated otherwise. Further, coordinate axes are intended to be exemplary only without delimiting the scope of the disclosure.

All references to the disclosure or examples thereof are intended to reference the particular example being discussed at that point and are not intended to imply any limitation as to the scope of the disclosure more generally. All language of distinction and disparagement with respect to certain features is intended to indicate a lack of preference for those features, but not to exclude such from the scope of the disclosure entirely unless otherwise indicated.

Recitation of values or dimensions herein are merely intended to serve as a shorthand method of referring individually to each separate value falling within the range, unless otherwise indicated herein, and each separate value is incorporated into the specification as if it were individually recited herein.

## Claims

1. A condensate separator (10) for a charge gas tube assembly of a stationary gas engine, comprising a cylindrical part (12) having an inner surface (12a) and an outer surface (12b) and a condensate outlet duct (14) configured to allow condensate to drain from the inner surface (12a) into the condensate outlet duct (14),

   wherein the cylindrical part (12) comprises a collection lip (16), configured to collect condensate flowing along the inner surface (12a) of the cylindrical part (12),
   **characterized in that**
   the collection lip (16) is an annular collection lip comprising a radially inward extending protruding portion (16a) protruding from the inner surface (12a) of the cylindrical part (12) and a cantilevered portion (16b) having a free end (161) and a fixed end (162), wherein the cantilevered portion (16b) is tapered such that a distance between the inner surface (12a) of the cylindrical part (12) and the cantilevered portion (16b) is smaller at the free end (161) than at the fixed end (162) of the cantilevered portion (16b).

2. The condensate separator (10) according to any of the previous claims, wherein the condensate outlet duct (14) comprises a tube (22) protruding from the outer surface (12b) of the cylindrical part (12).

3. The condensate separator (10) according to any of the previous claims, wherein the condensate outlet duct (14) is positioned at a first or second longitudinal end (121, 122) of the cylindrical part (12) defining an axial dimension of the cylindrical part (12).

4. The condensate separator (10) according to any of the previous claims, wherein the cylindrical part (12) and/or the condensate outlet duct (14) comprises aluminum, composite materials, plastics, and/or coated materials.

5. The condensate separator (10) according to any of the previous claims, wherein the outer surface (12b) of the cylindrical part (12) comprises an elastic coating (18), wherein the condensate outlet duct (14) extends through the elastic coating (18).

6. The condensate separator (10) according to claim 5, wherein the elastic coating (18) comprises an annular protrusion (19, 20) at at least one end (19, 20) of the cylindrical part (12) extending in an axial and/or radial direction.

7. The condensate separator (10) according to claims 5-6, wherein the elastic coating (18) comprises an elastomer.

8. The condensate separator (10) according to claims 5-7, wherein the elastic coating (112) is vulcanized onto the outer surface (12b) of the cylindrical part (12).

9. A charge gas tube assembly (200) for a gas engine comprising a charge gas manifold (210), at least one charge gas tube element (220) and at least one condensate separator (10) according to any of the previous claims 1-8 mounted between the charge gas manifold (210) and the charge gas tube element (220) and/or between the charge gas tube element (220) and a further charge gas tube element (222).

10. The charge gas tube assembly (200) according to claim 9, further comprising a condensate line (230) and a condensate tank (240), wherein the condensate line (230) and the condensate tank (240) are fluidly connected with the condensate outlet duct (14).

11. A gas engine (300) comprising a charge gas tube assembly (200) according to any of the claims 9-10.

**Patentansprüche**

1. Kondensatabscheider (10) für eine Ladegasrohranordnung eines stationären Gasmotors, umfassend ein zylindrisches Teil (12), das eine Innenoberfläche (12a) und eine Außenoberfläche (12b) aufweist, und einen Kondensatauslasskanal (14), der konfiguriert ist, um zu ermöglichen, dass Kondensat von der Innenoberfläche (12a) in den Kondensatauslasskanal (14) abfließen kann,

   wobei das zylindrische Teil (12) eine Sammellippe (16) umfasst, die konfiguriert ist, um Kondensat zu sammeln, das entlang der Innenoberfläche (12a) des zylindrischen Teils (12) fließt, **dadurch gekennzeichnet, dass** die Sammellippe (16) eine ringförmige Sammellippe ist, umfassend einen radial nach innen verlaufenden, vorstehenden Abschnitt (16a), der von der Innenoberfläche (12a) des zylindrischen Teils (12) vorsteht, und einen freitragenden Abschnitt (16b), der ein freies Ende (161) und ein festes Ende (162) aufweist, wobei der freitragende Abschnitt (16b) derart verjüngt ist, dass ein Abstand zwischen der Innenoberfläche (12a) des zylindrischen Teils (12) und dem freitragenden Abschnitt (16b) an dem freien Ende (161) kleiner ist als an dem festen Ende (162) des freitragenden Abschnitts (16b).

2. Kondensatabscheider (10) nach einem der vorstehenden Ansprüche, wobei der Kondensatauslasskanal (14) ein Rohr (22) umfasst, das von der Außenoberfläche (12b) des zylindrischen Teils (12) vorsteht.

3. Kondensatabscheider (10) nach einem der vorstehenden Ansprüche, wobei der Kondensatauslasskanal (14) an einem ersten oder zweiten Längsende (121, 122) des zylindrischen Teils (12) positioniert ist und eine axiale Abmessung des zylindrischen Teils (12) definiert.

4. Kondensatabscheider (10) nach einem der vorstehenden Ansprüche, wobei das zylindrische Teil (12) und/oder der Kondensatauslasskanal (14) Aluminium, Verbundmaterialien, Kunststoffe und/oder beschichtete Materialien umfassen.

5. Kondensatabscheider (10) nach einem der vorstehenden Ansprüche, wobei die Außenoberfläche (12b) des zylindrischen Teils (12) eine elastische Beschichtung (18) umfasst, wobei der Kondensatauslasskanal (14) durch die elastische Beschichtung (18) verläuft.

6. Kondensatabscheider (10) nach Anspruch 5, wobei die elastische Beschichtung (18) an mindestens einem Ende (19, 20) des zylindrischen Teils (12) einen ringförmigen Vorsprung (19, 20) umfasst, der in einer axialen und/oder radialen Richtung verläuft.

7. Kondensatabscheider (10) nach den Ansprüchen 5 bis 6, wobei die elastische Beschichtung (18) ein Elastomer umfasst.

8. Kondensatabscheider (10) nach den Ansprüchen 5 bis 7, wobei die elastische Beschichtung (112) auf die Außenoberfläche (12b) des zylindrischen Teils (12) vulkanisiert ist.

9. Ladegasrohranordnung (200) für einen Gasmotor, umfassend einen Ladegasverteiler (210), mindestens ein Ladegasrohrelement (220) und mindestens einen Kondensatabscheider (10) nach einem der vorstehenden Ansprüche 1 bis 8, der zwischen dem Ladegasverteiler (210) und dem Ladegasrohrelement (220) und/oder zwischen dem Ladegasrohrelement (220) und einem weiteren Ladegasrohrelement (222) montiert ist.

10. Ladegasrohranordnung (200) nach Anspruch 9, ferner umfassend eine Kondensatleitung (230) und einen Kondensattank (240), wobei die Kondensatleitung (230) und der Kondensattank (240) mit dem Kondensatauslasskanal (14) strömungsmäßig verbunden sind.

11. Gasmotor (300), umfassend eine Ladegasrohranordnung (200) nach einem der Ansprüche 9 bis 10.

**Revendications**

1. Séparateur de condensat (10) pour un ensemble tube de gaz de suralimentation d'un moteur à gaz stationnaire, comprenant une partie cylindrique (12) ayant une surface interne (12a) et une surface externe (12b) et un conduit de sortie de condensat (14) conçu pour permettre au condensat de s'écouler de la surface interne (12a) dans le conduit de sortie de condensat (14),

   dans lequel la partie cylindrique (12) comprend une lèvre de collecte (16), conçue pour collecter le condensat s'écoulant le long de la surface interne (12a) de la partie cylindrique (12), **caractérisé en ce que** la lèvre de collecte (16) est une lèvre de collecte annulaire comprenant une partie saillante s'étendant radialement vers l'intérieur (16a) faisant saillie depuis la surface interne (12a) de la partie cylindrique (12) et une partie en porte-à-faux (16b) ayant une extrémité libre (161) et une extrémité fixe (162), dans lequel la partie en porte-à-faux (16b) est effilée de sorte qu'une distance entre la surface interne (12a) de la partie cylindrique (12) et la partie en porte-à-faux (16b) est plus petite à l'extrémité libre (161) qu'à l'extrémité fixe (162) de la partie en porte-à-faux (16b).

2. Séparateur de condensat (10) selon l'une quelconque des revendications précédentes, dans lequel le conduit de sortie de condensat (14) comprend un tube (22) faisant saillie depuis la surface externe (12b) de la partie cylindrique (12).

3. Séparateur de condensat (10) selon l'une quelconque des revendications précédentes, dans lequel le conduit de sortie de condensat (14) est positionné à une première ou seconde extrémité longitudinale (121, 122) de la partie cylindrique (12) définissant une dimension axiale de la partie cylindrique (12).

4. Séparateur de condensat (10) selon l'une quelconque des revendications précédentes, dans lequel la partie cylindrique (12) et/ou le conduit de sortie de condensat (14) comprennent de l'aluminium, des matériaux composites, du plastique et/ou des matériaux revêtus.

5. Séparateur de condensat (10) selon l'une quelconque des revendications précédentes, dans lequel la surface externe (12b) de la partie cylindrique (12) comprend un revêtement élastique (18), dans lequel le conduit de sortie de condensat (14) s'étend à travers le revêtement élastique (18).

6. Séparateur de condensat (10) selon la revendication 5, dans lequel le revêtement élastique (18) comprend une saillie annulaire (19, 20) à au moins une extrémité (19, 20) de la partie cylindrique (12) s'étendant dans une direction axiale et/ou radiale.

7. Séparateur de condensat (10) selon les revendications 5 à 6, dans lequel le revêtement élastique (18) comprend un élastomère.

8. Séparateur de condensat (10) selon les revendications 5 à 7, dans lequel le revêtement élastique (112) est vulcanisé sur la surface externe (12b) de la partie cylindrique (12).

9. Ensemble tube de gaz de suralimentation (200) pour un moteur à gaz comprenant un collecteur de gaz de suralimentation (210), au moins un élément de tube de gaz de suralimentation (220) et au moins un séparateur de condensat (10) selon l'une quelconque des revendications précédentes 1 à 8, monté entre le collecteur de gaz de suralimentation (210) et l'élément de tube de gaz de suralimentation (220) et/ou entre l'élément de tube de gaz de suralimentation (220) et un autre élément de tube de gaz de suralimentation (222).

10. Ensemble tube de gaz de suralimentation (200) selon la revendication 9, comprenant en outre une conduite de condensat (230) et un réservoir de condensat (240), dans lequel la conduite de condensat (230) et le réservoir de condensat (240) sont raccordés fluidiquement au conduit de sortie de condensat (14).

11. Moteur à gaz (300) comprenant un ensemble tube de gaz de suralimentation (200) selon l'une quelconque des revendications 9 à 10.

**Fig. 1**

**Fig. 2**

**Fig. 3**

**Fig. 4**

**Fig. 5**

**REFERENCES CITED IN THE DESCRIPTION**

**Patent documents cited in the description**

- JP 6019481 B
- JP 6252076 B
- US 2004079079 A1
- US 2014346031 A1
- CN 209286866 U
- US 4503813 A
- DE 102005050133 A1